# DEMANDE DE BREVET EUROPEEN

(11) **EP 2 159 168 A1**
(43) Date de publication de la demande: **03.03.2010**
(21) Numéro de dépôt: 09305734.7
(22) Date de dépôt: 05.08.2009
(51) Int. Cl.: B65F 1/00, E04F 17/12

(54) **Vidoir à tri sélectif automatisé**

(30) Priorité: 01.09.2008 FR 0855844
(71) Demandeur: Nave, René, 42390 Villars (FR); Nave, Christophe, 43600 Les Villettes (FR)
(72) Inventeur: Nave, René, 42390 Villars (FR); Nave, Christophe, 43600 Les Villettes (FR)
(74) Mandataire: Dupuis, François

(57) **Abrégé**

Ce vidoir à tri sélectif automatisé du type comprenant une colonne d'évacuation de déchets en communication avec une ou plusieurs portes d'accès et d'introduction des déchets situés à des niveaux différents, un boitier de commande assurant la gestion de l'ouverture-fermeture des portes d'accès, la colonne (C) d'évacuation des déchets étant agencée à l'endroit de chacun des étages de l'habitation concernée pour la réception de modules (M) débouchant dans ladite colonne, lesdits modules étant agencés pour autoriser la réception de sacs déchets ou déchets eux-mêmes pour être évacués dans la colonne sous l'effet d'actionnement d'un moyen articulé pivotant, **caractérisé en ce que** chaque module (M) est intégré dans la continuité de la colonne d'évacuation des déchets en présentant une configuration similaire à la configuration de la colonne ou parties de colonnes pour venir s'emboîter et s'articuler dans une continuité en situation de non utilisation, et en ce que chaque module est agencé avec au moins un plateau (21-25) dans un plan horizontal recevant le sac de déchets à évacuer en position verticale et autorisant son évacuation de la colonne par simple tombée verticale, et en ce qu'il comprend un dispositif de pesée (30) intégré au module calculant le poids de la masse de déchets à évacuer et solidaire dudit plateau.

## Description

L'invention se rattache au secteur technique du traitement des déchets et gravats dans les bâtiments et immeubles collectifs en particulier.

Le triage des déchets d'origine alimentaire, végétale, de produits en verre ou en matière plastique, et autres détritus de toute nature, fait l'objet d'action de sensibilisation très importante auprès des consommateurs pour assurer, en mettant à disposition des équipements et containers, une meilleure gestion des déchets précités.

Il est bien connu de disposer aussi bien sur la voie publique que dans les sous-sols d'immeubles des containers affectés à tel ou tel type de déchets en requérant au consommateur une action de vigilance et de civisme.

Il a aussi été proposé des systèmes de triage automatique et d'évacuation des déchets à partir des différents étages d'un immeuble. Une telle installation a ainsi été décrite dans les brevets FR 2807083 et FR 2821873, dont l'un des inventeurs de la présente demande était également inventeur dans les brevets précités. Selon le brevet FR 2807083, l'installation est équipée d'un dispositif de sélection automatique des déchets introduits dans une ou des goulottes d'évacuation en position inclinée, situé en amont pour favoriser la descente des déchets, d'une colonne d'évacuation des déchets introduits par une trappe d'accès. Il est prévu un boitier de commande avec boutons de commande pour faire la sélection de la goulotte réceptrice des déchets. Selon le brevet FR 2821873 (figure 1), l'installation de triage automatique et d'évacuation de déchets et gravats dans les bâtiments est du type comprenant à chaque étage d'un immeuble une trappe (1) dont l'ouverture est commandée par un boîtier de sélection (2) comprenant autant de contacteurs qu'il y a de familles de déchets ou de gravats à évacuer dans des réceptacles spécifiques disposés en bas de l'immeuble. Elle comprend d'une part un dispositif collecteur (4) monté dans un caisson (7) sur pied et communiquant avec une goulotte rotative (9), entraînée par une transmission (8, 10, 11) commandée par actionnement d'un des contacteurs du boîtier de sélection (2) à l'étage, et, d'autre part, des manchons emboîtables (5) reliant de manière étanche les trappes (1) et le collecteur (4), au fur et à mesure de l'élévation de l'immeuble.

En pratique, la mise en oeuvre de cette installation présentait certains inconvénients et en particulier des défauts majeurs ont été constatés au niveau de l'insertion des déchets dans la trappe d'évacuation dans le conduit principal et en désinfection. En particulier, l'accès à la trappe, l'introduction des déchets et leur évacuation est peu pratique. Il arrive que le volume des déchets soit supérieur au volume de la trappe, et il faut alors compacter le sac de déchets. Cela est peu pratique, délicat et salissant. Il faut même très souvent faire de très nombreuses manipulations en va-et-vient de la trappe pour dégager le sac de déchets pour enfin l'évacuer. L'accès à la trappe se fait généralement par une introduction en oblique du sac à jeter. Tout cela fait que le problème n'a jamais été résolu en amont de l'installation, ce qui est essentiel pour les usagers. Compte tenu de ces inconvénients, ce type d'installation objet des brevets précités n'a pas été poursuivi.

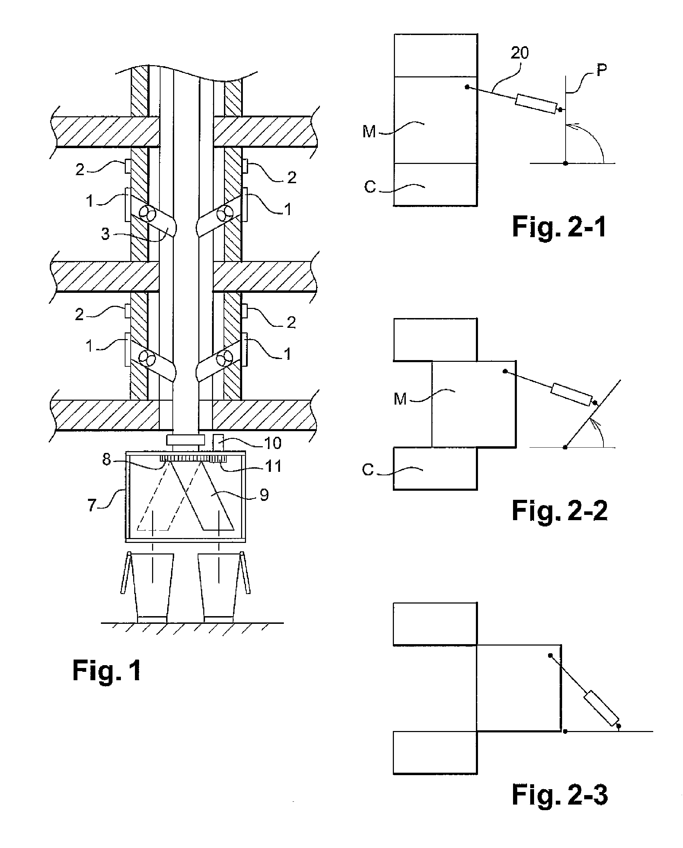

On connaît par ailleurs le brevet DE 2322420. En pratique, le document DE 2322420 décrit une installation de vide ordure intégrant dans une colonne (1) des modules (5) de réception de sacs de déchets (a). Chaque module est inséré dans la paroi de mur de la construction concernée et vient se loger et déborder intérieurement dans la colonne. Le module prévoit à sa base un fond en escamotable sous forme de trappe (15) articulée sur un axe (14) commandée par une poignée (17). En pratique, comme représenté figure 1, le sac de déchets tombe en inclinaison oblique pour venir être évacué dans la colonne. En égard de cette construction, le sac de déchets qui par définition n'a jamais la même configuration finale en étant rempli en fonction de la masse de déchets, de leur volume et de leur forme, est soumis à un effet de basculement et de glissement le long du profil de la trappe de sorte qu'il est susceptible de venir en butée contre la paroi opposée de la colonne d'évacuation.

Il s'effectue des bourrages et l'opérateur doit dégager l'ensemble à la main. En outre, la construction du module et son positionnement par rapport à la colonne l'amène à déborder intérieurement dans celle-ci. Ainsi, si l'on veut bien considérer que dans un immeuble à plusieurs étages, il y a un module d'évacuation de déchets par étage, force est de constater que la partie haute du module en débordement va constituer une butée en arrêt de sacs en provenance de l'étage supérieur.

A la connaissance des demandeurs, il n'existe pas de systèmes satisfaisants à ce jour, alors que l'acuité du problème posé demeure.

La démarche du demandeur a donc été de reconsidérer globalement le concept de l'existant en vue de proposer une solution satisfaisante répondant aux objectifs de faciliter l'insertion des déchets à évacuer, et aussi d'assurer la désinfection et la décontamination de toute la zone de passage des déchets depuis leur insertion jusqu'à leur évacuation.

La solution apportée répond de manière satisfaisante à cela.

Selon une première caractéristique de l'invention, le vidoir à tri sélectif automatisé du type comprenant une colonne d'évacuation de déchets en communication avec une ou plusieurs portes d'accès et d'introduction des déchets situés à des niveaux différents, un boitier de commande assurant la gestion de l'ouverture-fermeture des portes d'accès, la colonne d'évacuation des déchets étant agencée à l'endroit de chacun des étages de l'habitation concernée pour la réception de modules débouchant dans ladite colonne, lesdits modules étant agencés pour autoriser la réception de sacs déchets ou déchets eux-mêmes pour être évacués dans la colonne sous l'effet d'actionnement d'un moyen articulé pivotant, est remarquable en ce que chaque module est intégré dans la continuité de la colonne d'évacuation des déchets en présentant une configuration similaire à la configuration de la colonne ou parties de colonnes pour venir s'emboîter et s'articuler dans une continuité en situation de non utilisation, et en ce que chaque module est agencé avec au moins un plateau dans un plan horizontal recevant le sac de déchets à évacuer en position verticale et autorisant son évacuation de la colonne par simple tombée verticale, et en ce qu'il comprend un dispositif de pesée intégré au module calculant le poids de la masse de déchets à évacuer et solidaire dudit plateau.

Ces caractéristiques et d'autres encore ressortiront bien de la suite de la description.

Pour fixer l'objet de l'invention illustrée d'une manière non limitative aux figures des dessins où :
- la figure 1 est une vue à caractère schématique illustrant au titre de l'art antérieur l'installation de triage automatique, selon le brevet FR 2821873
- les figures 2.1, 2.2, 2.3 sont des vues à caractère schématique illustrant la mise en oeuvre du principe de l'invention d'extraction d'un panier support par rapport à la colonne d'évacuation des déchets dans une première réalisation. La figure 2.1 illustre la position initiale du panier support intégré dans la colonne, la porte ou trappe d'accès étant fermée, puis selon la figure 2.2 en position d'ouverture de porte, et la figure 2.3 en fin d'ouverture.
- la figure 3.1 est une vue à caractère schématique illustrant la mise en oeuvre du principe de l'invention dans une seconde réalisation en vue du chargement des détritus avec un mécanisme de rotation, en phase de présentation pour la réception des déchets.
- la figure 3.2 est une vue suivante à la figure 3.1 pour le remplissage des déchets.
- la figure 3.3 est une vue suivante pour la phase évacuation des déchets.
- les figures 4.1, 4.2, 4.3 sont une troisième variante de mise en oeuvre de l'invention et du panier support récepteur des déchets avec un mécanisme de déplacement du panier support. La figure 4.1 illustre la dépose des déchets, la figure 4.2 la fermeture de la porte ou trappe d'accès, et la figure 4.3 l'évacuation des déchets.
- la figure 5.1 est une vue à grande échelle illustrant la mise en oeuvre du vidoir selon un module introduit dans la colonne d'évacuation des déchets selon l'invention.
- la figure 5.2 est similaire à la figure 5.1 à l'exception de la non représentation de la porte d'accès.

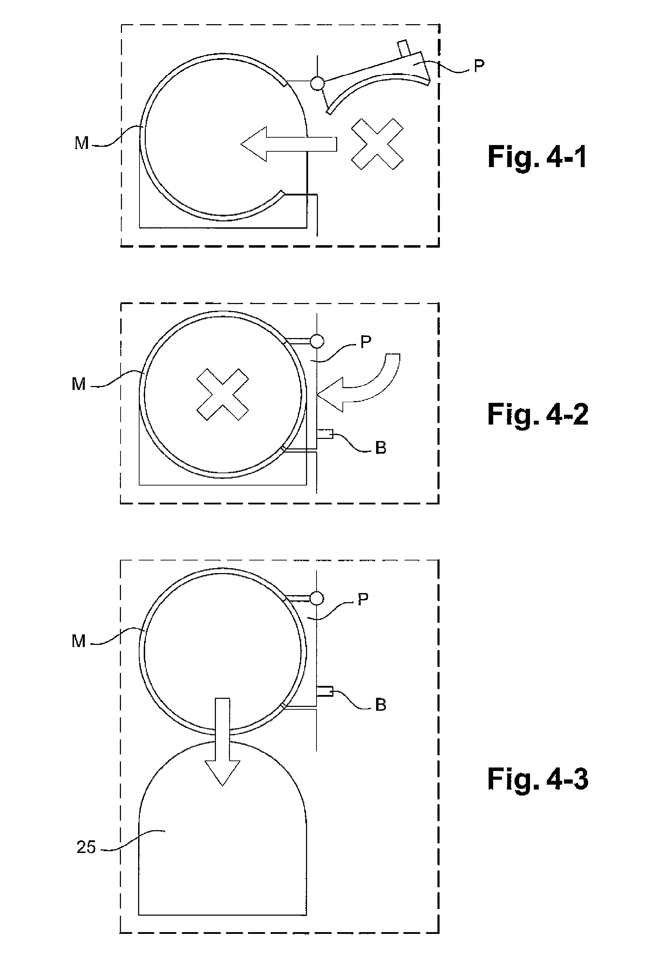

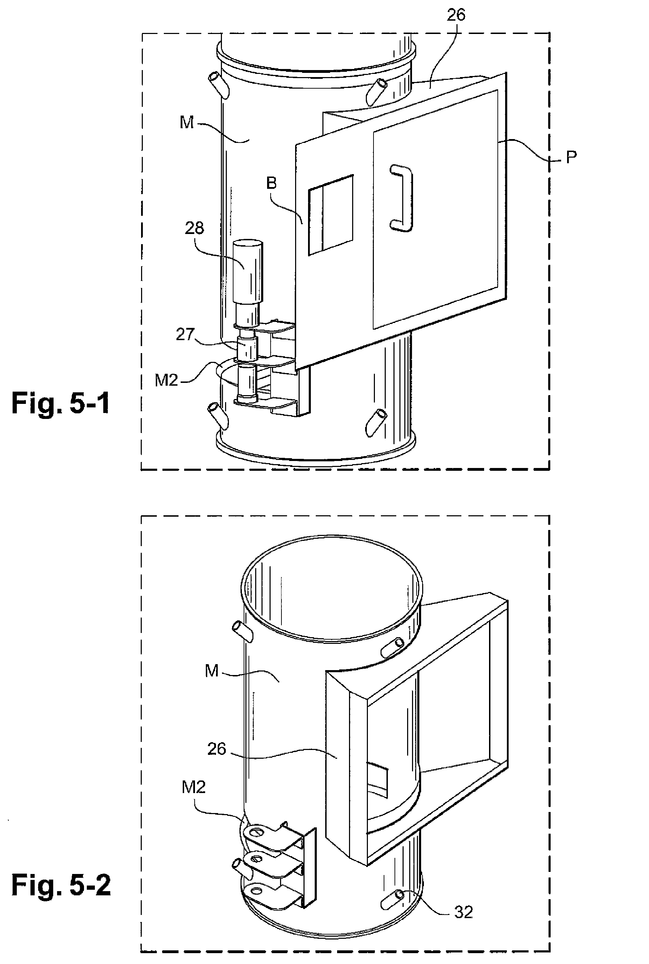

Ces figures 5.1 et 5.2 sont en rapport avec les figures 4.1, 4.2, 4.3.

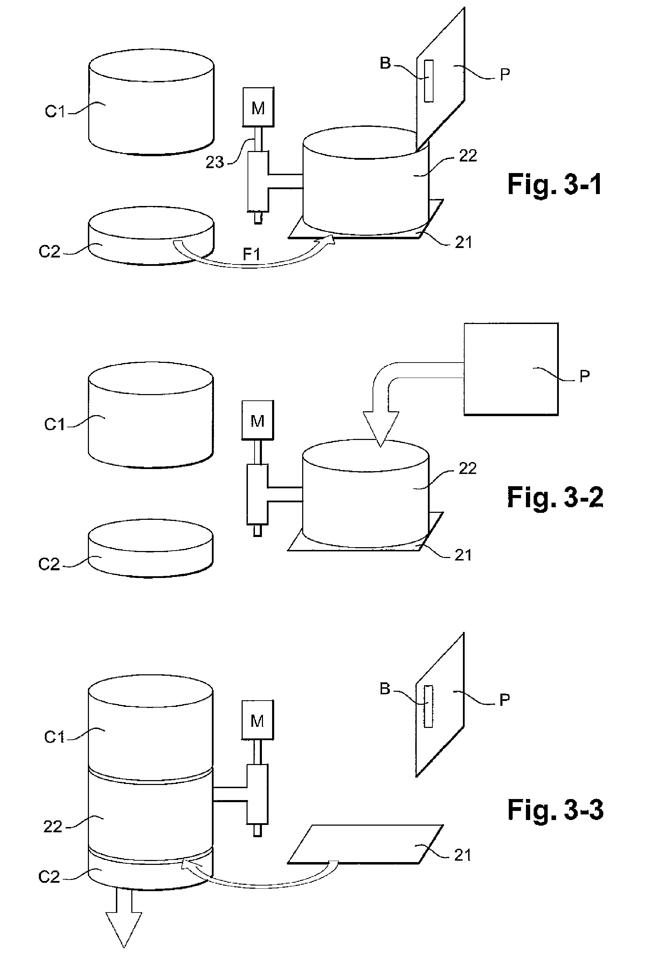

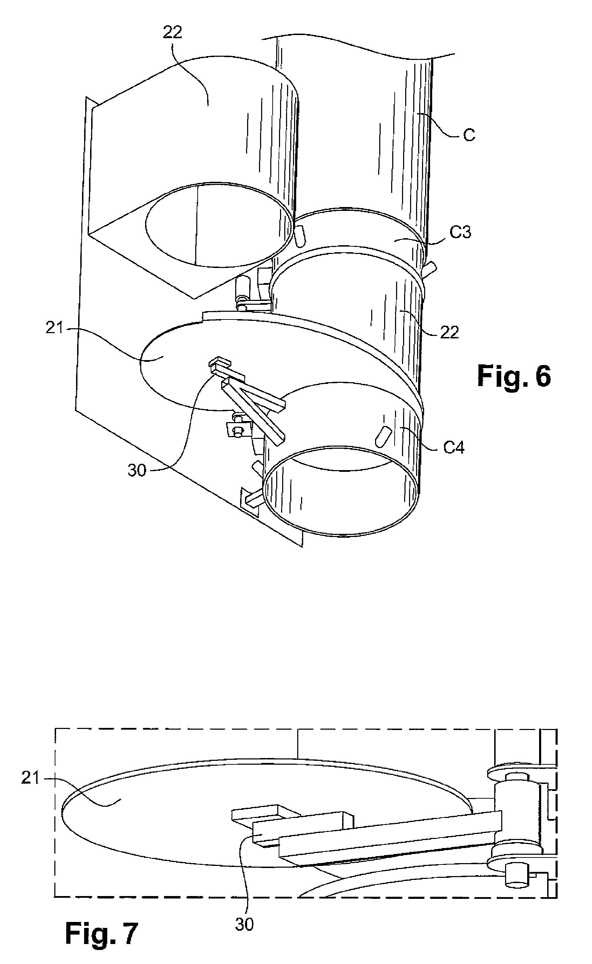

- la figure 6 est une vue à grande échelle illustrant la mise en oeuvre de l'invention dans une mise en oeuvre spécifique avec plateau fixe et panier mobile. Cette figure est en rapport avec les figures 3.1, 3.2, 3.3. Le panier mobile est représenté en position sortie et en position rentrée.
- la figure 7 est une vue partielle à grande échelle illustrant la mise en oeuvre de l'invention dans une autre utilisation avec plateau mobile avec un dispositif de pesée intégré. Cette figure est en rapport avec les figures 4.1, 4.2, 4.3.

Afin de rendre plus concret l'objet de l'invention, on le décrit maintenant d'une manière non limitative illustrée aux figures des dessins.

Le vidoir à tri sélectif automatisé selon l'invention se distingue de l'art antérieur représenté par les brevets FR 2807083 et 2821873 par la conception à chaque étape d'un immeuble, maison ou bâtiment incluant un système vide-ordure par l'intégration de modules (M) qui sont agencés pour être intégrés directement dans la colonne d'évacuation des déchets sans système de goulottes inclinées en relation avec la trappe d'accès, les modules étant agencés pour autoriser la réception des sacs de déchets ou des déchets eux-mêmes dans une position verticale d'accès aisé pour être ensuite évacués dans la goulotte verticalement par gravité sous l'effet d'actionnement d'un moyen articulé pivotant dans un plan horizontal et libérant la colonne pour autoriser ladite évacuation. Selon une autre disposition en combinaison, l'accès à un module se fait par le biais d'un boitier de télécommande et de reconnaissance et d'identification ou et en bloquant en phase de sollicitation l'accès aux autres modules se situant à des niveaux d'étages différents.

La mise en oeuvre de l'invention qui sera décrite par la suite dans différentes réalisations s'effectue à partir du concept technique précité.

En se référant aux figures 2.1, 2.2, 2.3, on a représenté l'intégration du module (M) dans une colonne (C) d'évacuation des déchets, ledit module étant déplaçable transversalement et horizontalement grâce à un moyen de commande et de traction (20) associé à la porte (P) de la trappe. Le module (M) présente un fond (M1) mobile qui en position fermée permet la retenue des déchets ou sacs à déchets, et qui peut être déplacé horizontalement ou constituer une trappe elle-même pour l'évacuation des déchets dans la colonne. On a ainsi représenté schématiquement aux figures 2.1, 2.2, et 2.3 le principe de cette mise en oeuvre.

Les figures 3.1, 3.2 et 3.3 illustrent une mise en oeuvre de ce concept. On a représenté par (C1-C2) les deux parties de colonnes fixes entre lesquelles le module (M) va se mouvoir. Le module est constitué par deux composants, à savoir un plateau (21) fixe et un panier mobile (22) monté et articulé en rotation sur un axe (23) avec dispositif motorisé. La porte d'accès est toujours représentée par (P).

Le panier mobile présente une configuration cylindrique fermée similaire à la configuration de la colonne ou parties de colonnes (C1-C2) pour venir s'emboiter et s'intercaler dans une continuité en cas de non utilisation. Le panier (22) est ouvert en son fond. En se référant auxdites figures, la figure 3.1 représente le déplacement du panier (22) ou le plateau de réception selon la flèche F1. La porte d'accès reste fermée. Le déplacement a été autorisé par la commande sur le boitier (B) de télécommande. Dans cette situation, on distingue bien que la colonne (C) d'évacuation des déchets n'est plus continue, car le module comprenant le panier s'est déplacé en vue de son remplissage.

Cela justifie donc que toute intervention par un usager pour l'écoulement et l'évacuation de déchets à partir d'autres modules situés à d'autres étages soit condamnée ou verrouillée temporairement pendant l'opération en cours, sinon il y aurait risque d'échappement de déchets hors de la colonne d'évacuation.

Selon la figure 3.2, après positionnement du panier (22) sur le plateau fixe, la porte est déverrouillée et l'usager peut mettre les déchets ou le sac à déchets dans le panier. La phase suivante consiste au repositionnement du module (M) au sein de la colonne, en vue de l'évacuation des déchets collectés dans le panier. Ce dernier est donc déplacé à nouveau par son moyen de commande en entrainant le sac de détritus sur le plateau fixe jusqu'à le présenter en continuité de la colonne et libérant ainsi le plateau fixe (21). L'évacuation des déchets s'effectue après fermeture de la porte selon une programmation établie. On a représenté symboliquement pour la compréhension de l'invention le plateau fixe (21) sous une forme géométrique carrée, mais ce plateau en pratique présente une forme géométrique plus complexe en étant fixée à la partie de colonne (C2) et en autorisant le déplacement circulatoire du panier d'une position à une autre, tout en conservant un contact avec le panier jusqu'à ce que ce dernier intègre sa position au sein de la colonne d'évacuation des déchets. Dans cette mise en oeuvre, le sac de détritus est positionné à l'extérieur de la colonne puis translaté vers celle-ci sous l'action de retrait et la remise en place du panier mobile. Dans cette mise en oeuvre, le volume du panier (22) détermine le volume du sac de détritus et de déchets et ne peut aller au-delà de la capacité du panier.

Tout en restant dans le principe de l'invention, on a représenté aux figures 4.1, 4.2, 4.3, une autre variante de l'invention. On a ainsi représenté en vue de dessus à titre schématique cette variante. Le module (M) reste fixe, intégré dans la colonne (C) et reçoit un plateau de fond (25) escamotable

La porte (P) d'accès est directement reliée audit module avec une articulation. Le plateau de fond (25) est toujours déplaçable horizontalement à l'aide de moyens de guidage et de moyens motorisés appropriés. Dans cette mise en oeuvre, le module avec son fond constitue en quelque sorte une chambre de grand volume autorisant son remplissage de déchets ou sacs de déchets qui seront ensuite évacués après fermeture de la porte par le déplacement du plateau et l'ouverture de la colonne d'évacuation des déchets. Ainsi, la figure 4.2 représente le positionnement des déchets dans le module et sur le plateau de fond, et le figure 4.3 le déplacement du plateau et l'évacuation des déchets par tombée verticale.

A partir du concept de l'invention décrit dans son principe, on fait ci-après référence à des réalisations et mises en oeuvre de l'invention.

Figure 5.1, le module (M) constitue un ensemble avec la mise en oeuvre d'un plateau mobile (25) du type exposé aux figures 4.1, 4.2, 4.3.

Le module (M) reçoit un boitier de liaison (26) parallélépipédique par exemple et fixé par soudure, mécano soudure, collage ou autre audit module. La porte d'accès (P) se trouve sur le boitier de liaison, ainsi que le boitier de commande (B) et d'identification de l'opérateur. Bien évidemment, le module présente une ouverture correspondante pour l'introduction des déchets ou sacs de déchets. Dans sa position inférieure, le module (M) présente une fente (M2) horizontale pour le passage du plateau (25) articulé constituant le fond du module. Le plateau qui est circulaire pour correspondre à la section du module peut pivoter par rapport à un axe d'articulation (27).

Le groupe moteur (28) est représenté à titre d'exemple dans le prolongement de l'axe de pivotement du plateau.

On a représenté figure 6 à titre d'exemple une mise en oeuvre spécifique du principe illustré figures 3.1, 3.2, 3.3. Le module (M) est toujours intégré dans la colonne (C) entre les éléments de conduits supérieur (C1) et inférieur. Dans cette réalisation, le module comprend deux bagues fixes (C3-C4) constituant des parties de colonne (C) entre lesquelles va se déplacer la partie panier mobile (22) de section cylindrique et établissant une continuité de la colonne. La bague fixe (C3) supérieure est fixée par emmanchement ou autre au conduit supérieur de la colonne et de même pour la bague fixe (24) inférieure avec le conduit inférieur sous-jacent de la colonne. Cette bague fixe (C4) est par contre agencée pour constituer le support du plateau fixe (21). Ce dernier présente une forme géométrique complexe avec une partie formant col s'adaptant et se fixant sur la partie supérieure de la bague (C4) et une partie débordante en goutte d'eau de telle manière qu'elle constitue toujours le fond du panier (22) lorsque ce dernier se déplace pour la réception des déchets et ensuite leur évacuation. Ainsi, lors du mouvement du panier, exposé aux figures 3.1, 3.2, 3.3, le panier chargé de déchets reprendra sa place dans la continuité de la colonne et autorisera par basculement et par gravité l'évacuation des déchets vers le bas.

Il y a lieu maintenant de décrire une autre disposition de l'invention qui inclut un dispositif de pesée (30) permettant d'avoir une parfaite connaissance du poids de la masse de déchets à évacuer. Ce dispositif de pesée est relié par des moyens de transmission au boitier de commande pour transmettre les informations recueillies et les affecter à l'usager concerné qui s'est préalablement identifié pour procéder à cette évacuation de déchets. Le dispositif de pesée se trouve être positionné sous le plateau fixe (21) ou le plateau mobile (25), au centre de celui-ci pour procéder à une mesure correcte. Comme représenté figure 7, dans le cas du plateau mobile, le dispositif de pesée est positionné horizontal audit plateau en vue des phases d'évacuation. Il y a lieu de préciser que le dispositif de pesée est susceptible de fonctionner avec des limites de poids de détritus à évacuer et en cas de surcharge le système est bloqué avec une alarme ou signalisation pour correction de la surcharge.

Selon un autre aspect de l'invention, le module est équipé de plusieurs buses (32) permettant la projection de produits désinfectants dans la colonne. Ces buses peuvent être disposées aussi sur les conduits de connexion de la colonne situés de part et d'autre et entourant le module. Ces buses sont fixées de toute manière appropriée sur le module et/ou les conduits récepteurs et sont alimentées par des cartouches ou autres. Leur intervention s'effectue à chaque utilisation du module et sont commandées et fonctionnent par une programmation dûment établie.

Ainsi, l'invention présente de nombreux avantages. La réalisation des modules ainsi décrits permet leur adaptation aussi bien dans des installations nouvelles de colonnes, qu'en intégration dans des colonnes existantes. Les dimensions des modules en terme de section peuvent être adaptées aux dimensions des colonnes existantes. La mise en place des déchets en vue de leur évacuation est très pratique. Elle se fait verticalement et il n'y a plus de phénomènes de bourrage, de compression des déchets et de blocage de la porte de la trappe. Le vidoir selon l'invention est intégré dans les installations d'immeubles neufs prévues à cet effet, et ainsi une réhabilitation des bâtiments par l'extérieur en constituant une enceinte autonome.

La mise en oeuvre est très pratique avec des possibilités de choix de l'installation selon les variantes proposées en fonction des besoins des utilisateurs et aussi des coûts et donc des budgets affectés.

L'invention permet une gestion automatisée et sécurisée des déchets et permet aussi une affectation des coûts de traitement des déchets à chacun des usagers.

## Revendications

1. Vidoir à tri sélectif automatisé du type comprenant une colonne d'évacuation de déchets en communication avec une ou plusieurs portes d'accès et d'introduction des déchets situés à des niveaux différents, un boitier de commande assurant la gestion de l'ouverture-fermeture des portes d'accès, la colonne (C) d'évacuation des déchets étant agencée à l'endroit de chacun des étages de l'habitation concernée pour la réception de modules (M) débouchant dans ladite colonne, lesdits modules étant agencés pour autoriser la réception de sacs déchets ou déchets eux-mêmes pour être évacués dans la colonne sous l'effet d'actionnement d'un moyen articulé pivotant,
**caractérisé en ce que** chaque module (M) est intégré dans la continuité de la colonne d'évacuation des déchets en présentant une configuration similaire à la configuration de la colonne ou parties de colonnes pour venir s'emboîter et s'articuler dans une continuité en situation de non utilisation, et **en ce que** chaque module est agencé avec au moins un plateau (21-25) dans un plan horizontal recevant le sac de déchets à évacuer en position verticale et autorisant son évacuation de la colonne par simple tombée verticale,
et **en ce qu'**il comprend un dispositif de pesée (30) intégré au module calculant le poids de la masse de déchets à évacuer et solidaire dudit plateau.

2. Vidoir selon la revendication 1, **caractérisé en ce que** le module (M) est solidarisé à la porte (P) par un moyen de commande et de traction pour assurer son déplacement transversal et horizontal.

3. Vidoir selon l'une quelconque des revendications 1 et 2, **caractérisé en ce que** le module (M) présente un fond (M1) avec un plateau mobile (25) qui en position fermée permet la retenue des déchets ou sacs à déchets, et en position ouverte déplacé horizontalement autorise l'évacuation des déchets.

4. Vidoir selon la revendication 1, **caractérisé en ce que** le module comprend un plateau (21) fixe et un panier mobile (22) monté et articulé en rotation sur un axe (23) avec dispositif motorisé, et **en ce que** le plateau présente une forme géométrique complexe avec une partie fixée à la colonne (C) et de son composant (C2) adjacent au module, et une partie en débordement autorisant le déplacement circulatoire du panier d'une position à une autre.

5. Vidoir selon l'une quelconque des revendications 1 et 3, **caractérisé en ce que** le module (M) reçoit un boitier de liaison (26) sur lequel se trouve la porte d'accès (P) et un boitier de commande (B) et d'identification de l'opérateur, et **en ce que** le module présente dans sa partie inférieure une fente (M2) horizontale le passage d'un plateau (25) articulé constituant le fond du module.

6. Vidoir selon la revendication 5, **caractérisé en ce qu'**il comprend un groupe moteur (28) monté sur l'axe de pivotement du plateau.

7. Vidoir selon la revendication 4, **caractérisé en ce que** le module comprend deux bagues fixes (C3-C4) constituant des parties de colonnes (C) entre lesquelles est disposé le panier mobile (22), et **en ce que** la bague fixe (C3) supérieure est fixée au conduit supérieur de la colonne, et la bague fixe (C4) au conduit inférieur sous-jacent de la colonne, et **en ce que** la bague fixe (C4) est agencée pour constituer le support du plateau fixe (21).

8. Vidoir selon l'une quelconque des revendications 1 à 7, **caractérisé en ce qu'**il comprend un dispositif de pesée (30) relié par des moyens de transmission au boitier de commande.

9. Vidoir selon la revendication 8, **caractérisé en ce que** le dispositif de pesée est positionné sous le plateau fixe ou le plateau mobile, et est relié par des moyens de transmission au boitier de commande pour transmettre les informations recueillies et les affecter à l'usager considéré préalablement identifié.

10. Vidoir selon la revendication 1, **caractérisé en ce que** le module (M) est équipé d'une pluralité de buses (32) autorisant la projection de produits désinfectants dans la colonne et disposées sur le module et/ou les conduits récepteurs.
